# EUROPÄISCHE PATENTSCHRIFT

(11) **EP 3 670 214 B1**
(45) Veröffentlichungstag und Bekanntmachung des Hinweises auf die Patenterteilung: **29.09.2021**
(21) Anmeldenummer: 19212520.1
(22) Anmeldetag: 29.11.2019
(51) Int. Cl.: B60K 28/08, B60W 30/182, B60W 50/00, B62D 13/00, B60D 1/30, B60D 1/24, B60D 1/62

(54) **VERFAHREN ZUM BETREIBEN EINES KRAFTFAHRZEUGS MIT EINER ANHÄNGERVORRICHTUNG, FAHRERASSISTENZEINRICHTUNG UND KRAFTFAHRZEUG**
MOTOR VEHICLE, DRIVER ASSISTANCE DEVICE AND METHOD FOR OPERATING A MOTOR VEHICLE WITH A TRAILER DEVICE
PROCÉDÉ DE FONCTIONNEMENT D'UN VÉHICULE AUTOMOBILE DOTÉ D'UN DISPOSITIF DE REMORQUE, AGENCEMENT D'AIDE AU CONDUCTEUR ET VÉHICULE AUTOMOBILE

(30) Priorität: 20.12.2018 DE 102018133229
(43) Veröffentlichungstag der Anmeldung: 24.06.2020
(73) Patentinhaber: Volkswagen AG, 38440 Wolfsburg (DE)
(72) Erfinder: Hüger, Philipp, 38471 Rühen (DE); Ziebart, Sascha, 38547 Calberlah (Wettmershagen) (DE); Heuer, Jens, 38268 Lengede (DE); Milbradt, Jens, 38226 Salzgitter (DE)

(56) Entgegenhaltungen:
- DE-A1-102004 035 579
- DE-A1-102011 076 392
- DE-A1-102015 112 053
- DE-A1-102015 207 001
- US-A1- 2006 149 447
- US-A1- 2010 332 049
- US-A1- 2018 093 538

## Beschreibung

Die Erfindung betrifft ein Verfahren zum Betreiben eines Kraftfahrzeugs, das durch eine Fahrerassistenzeinrichtung des Kraftfahrzeugs durchgeführt wird. Unter einer Fahrerassistenzeinrichtung wird dabei ein Gerät, eine Gerätekomponente oder ein Geräteverbund verstanden, der zum Einstellen unterschiedlicher Fahrmodi eingerichtet ist, und zum Beispiel als Fahrerassistenzsystem ausgestaltet sein und hierzu zum Beispiel einen Spurhalteassistenten oder eine Regelung einer Längs- und/oder Quersteuerung des Kraftfahrzeugs umfassen kann.

Kraftfahrzeuge werden häufig nicht nur zum Transport von Personen benutzt, sondern auch zum Transport von Ladegut. Nimmt dieses sehr viel Platz ein oder ist dieses sehr schwer, wird hierzu eine Anhängervorrichtung benutzt, zum Beispiel ein Waggon, Fahrradanhänger oder eine andere Art von Anhänger.

Als Ladegut oder Transportgut können zum Beispiel sehr sensible Gegenstände transportiert werden, zum Beispiel Tiere oder zerbrechliche Gegenstände. Zusätzlich oder alternativ kann das Ladegut oder Transportgut zum Beispiel sehr schwer sein. Insbesondere der Transport von Tieren, zum Beispiel eines Pferdes, das von Natur aus schreckhaft ist und dessen Wert durchaus sehr hohe Summen erreichen kann, kann den Fahrer jedoch vor einige Probleme stellen. Hierbei kommt besonders die Unsicherheit beim Fahren mit einem beladenen Pferdeanhänger in Spiel.

In manchen Gegenden sind solche Pferdetransporte besonders häufig, zum Beispiel in Niedersachsen, dass als Pferdeland bekannt und berühmt ist. Allein in Niedersachsen sind rund 197.000 Pferde registriert, womit das Land Niedersachsen den zweithöchsten Pferdebestand unter den Bundesländern hat. Die besonderen Anforderungen an eine Fahrt mit einem sensiblen und/oder schweren Transportgut stellt jedoch auch bei zum Beispiel einem Transport eines Bootes oder von großen Glasplatten die gleichen Anforderungen an den Fahrer.

Während einer Fahrt mit hohen Geschwindigkeiten kann ein Schlingern des Gespanns durch minimale Ausweichbewegungen in der Lenkung kompensiert werden. Im Stand der Technik ist ein Trail Assist-System bekannt, das eine große Hilfe beim Einparken bereitstellt. Jedoch stellen bereits die Fahrt zum Zielort, und hier speziell die Momente des Anfahrens und des Bremsens mit der wertvollen Fracht, den Fahrer vor große Herausforderungen. Das System unterstützt beim Rangieren mit einem Anhänger, in dem bei Vorgabe eines Knickwinkels durch den Fahrer die Lenkung entsprechend angesteuert wird.

Im Beispiel des Pferdetransports können sich auf einem Anhänger in der Regel pro Pferd ein Körpergewicht von 600 - 800 Kilogramm befinden. Nicht selten sind es sogar zwei Pferde. Diese müssen die Fahrbewegungen im Grunde "blind" ausgleichen, was bei ruckartigem Anfahren, zu starkem Beschleunigen und zu starken Bremsmanövern für Stress und Nervosität bei Pferd und Fahrer führt. Das macht ein schweres Tier zu einem sensiblen Transportgut.

Die DE 103 26 190 A1 beschreibt eine Vorrichtung zur Ermittlung einer räumlichen Ausrichtung eines mit einem Zugfahrzeug verbundenen Aufliegers oder Anhängers, mit am Zugfahrzeug angeordneten Sensormitteln zur Erzeugung von Sensorsignalen, die die räumliche Ausrichtung des Aufliegers oder Anhängers relativ zum Zugfahrzeug beschreiben, wobei die Sensormittel Konturen des Aufliegers oder Anhängers erfassen. Die besondere Problematik beim Transport von sensiblem, fragilen und/oder besonders schweren Ladegut wird dabei nicht berücksichtigt.

Aus der DE 199 01 953 A1 ist eine Vorrichtung zur Bestimmung eines Abstands zwischen der Rückseite eines Kraftfahrzeugs und einem rückwärtig des Kraftfahrzeugs angeordneten Gegenstands bekannt, mit Sensormitteln zur Erfassung von Sensorsignalen, die einen Abstand zwischen wenigstens einem Ort auf der Rückseite des Kraftfahrzeugs und einem Ort auf der dem Kraftfahrzeug zugewandten Seite des Gegenstands darstellen, und eine Auswerteeinrichtung zur Ermittlung von Abstandswerten auf der Grundlage der erfassten Sensorsignale, wobei die Auswerteeinrichtung Mittel zur Feststellung eines periodischen Verhaltens der ermittelten Abstandswerte aufweist. Hierbei wird eine Instabilität des Anhängers ermittelt. Die besondere Problematik beim Transport von sensiblem, fragilen und/oder besonders schweren Ladegut wird nicht berührt.

Die DE 10 2011 010 994 A1 beschreibt ein Verfahren und eine Vorrichtung zum Stabilisieren der Fahrt eines schlingernden, von einem Fahrzeug gezogenen Anhängers. Die besondere Problematik beim Transport von sensiblem, fragilen und/oder besonders schweren Ladegut wird dabei nicht berücksichtigt.

Die DE 10 2011 076 392 A1 beschreibt eine Anordnung zur Verbindung eines Zugfahrzeugs mit einem Anhänger mit einer zugfahrzeugseitigen Kupplungseinheit und einer anhängerseitigen Kupplungseinheit, wobei der zugfahrzeugseitigen Kupplungseinheit eine Messeinrichtung zugeordnet ist, welche die auf die zugfahrzeugseitige Kupplungseinheit wirkende Kraft in mindestens einer Richtung erfasst und auswertet.

Eine der Erfindung zugrunde liegende Aufgabe ist das Reduzieren einer Wahrscheinlichkeit, dass sensibles Ladegut verletzt oder gestresst wird.

Die gestellte Aufgabe wird durch das erfindungsgemäße Verfahren und die erfindungsgemäßen Vorrichtungen gemäß der nebengeordneten Patentansprüche gelöst. Vorteilhafte Weiterbildungen sind durch die Unteransprüche gegeben.

Die Erfindung basiert auf der Idee, einen Fahrmodus in Abhängigkeit von einem Grad einer Sensibilität des Ladeguts und/oder eines Gewichts der Ladeguts bereitzustellen. Hierdurch wird situationsspezifisch eine Längsführung ermöglicht und sensible/schwere Last kann sicherer transportiert werden.

Das erfindungsgemäße Verfahren zum Betreiben eines Kraftfahrzeugs mit einer Anhängervorrichtung weist die folgenden, durch eine Fahrerassistenzeinrichtung des Kraftfahrzeugs durchgeführten Schritte auf.

Es erfolgt ein Feststellen einer Kopplung des Kraftfahrzeugs mit der Anhängervorrichtung, beispielsweise durch Feststellen einer elektrischen Verbindung an einer Anhängerkupplung.

Durch die Fahrerassistenzeinrichtung erfolgt ein Bereitstellen eines Ladegutkategorisierungssignals, das eine Eigenschaft eines Ladeguts, das auch als Transportgut bezeichnet werden kann, der Anhängervorrichtung beschreibt, zum Beispiel ein Gewicht des Ladeguts und/oder eine Art des Ladeguts, zum Beispiel "Tier". Anhand des bereitgestellten Ladegutkategorisierungssignals erfolgt durch die Fahrerassistenzeinrichtung ein Überprüfen, ob das Ladegut ein vorgegebenes Spezialtransportkriterium erfüllt. Das vorgegebene Spezialtransportkriterium kann zum Beispiel in einem Datenspeicher abgelegt sein, und beschreibt einen vorgegebenen Mindestgrad einer Sensibilität des Ladeguts und damit zum Beispiel die Art des Ladeguts und/oder des Transportguts, zum Beispiel "Tiertransport".

Falls das Ladegut das vorgegebene Spezialtransportkriterium erfüllt, erfolgt durch die Fahrerassistenzeinrichtung ein Festlegen eines zumindest teilautonomen Fahrmodus anhand der durch das bereitgestellte Ladegutkategorisierungssignal beschriebenen Eigenschaft. Ist die Eigenschaft beispielsweise ein Gewicht über 200 Kilogramm, so kann zum Beispiel ein Fahrmodus festgelegt werden, der eine Querführung des Kraftfahrzeugs automatisch steuern kann. Alternativ oder zusätzlich kann, beschreibt das bereitgestellte Ladegutkategorisierungssignal zum Beispiel ein Gewicht über 200 Kilogramm und/oder dass das Ladegut "besonders sensibel" ist, zum Beispiel ein Fahrmodus festgelegt werden, der zumindest teilautonom eine Quer- und Längsführung des Kraftfahrzeugs steuert.

Durch die Fahrerassistenzeinrichtung erfolgt dann das Aktivieren des festgelegten Fahrmodus.

Die oben beschriebenen Nachteile werden reduziert oder sogar behoben. Beim Fahren mit einem Anhänger mit sensibler Last wird dem Fahrer eine ladegutspezifische Unterstützung bereitgestellt. Mit anderen Worten berücksichtigt das erfindungsgemäße Verfahren die individuelle Beladung der Anhängervorrichtung. Die Anhängervorrichtung wird sicherer geführt und zum Beispiel ein darin transportiertes Pferd steht während der Fahrt ruhiger.

Vorzugsweise kann ein Fahrmodus festgelegt werden, der den Fahrer in der Längsführung unterstützt. Mit anderen Worten kann vorzugsweise ein Fahrmodus festgelegt werden, der eine Längsführung des Kraftfahrzeugs steuert.

Der festgelegte Fahrmodus führt teilautonom oder vollautonom durch:
- ein Regeln eines Anfahrverhaltens des Kraftfahrzeugs im Antrieb, vorzugsweise in Bezug auf eine Längsführung; dadurch wird das Anfahrverhalten sanfter durchgeführt und ruckartigen Bewegungen wird vorgebeugt, oder diese werden sogar vollständig vermieden, wodurch das Ladegut schonender transportiert wird; und/oder
- ein Begrenzen einer maximalen Beschleunigung, vorzugsweise im vorderen Fahrpedalbereich, also im Bereich eines Pedalwegs von null Prozent bis zu einem Teilwert des maximalen Pedalwegs liegt; beispielsweise kann dabei vorgesehen sein, dass zum Beispiel in Notsituationen durch ein kräftigeres Treten des Fahrpedals diese Begrenzung überstimmt werden kann; auch durch das Begrenzen der maximalen Beschleunigung verhält sich das Kraftfahrzeug im Betrieb sanfter und das Ladegut wird folglich schonender transportiert; und/oder

- ein sogenanntes "Glätten einer Lenkbewegung" durch zum Beispiel ein Reduzieren eines Lenkwinkels oder Kurvenradius, und/oder ein Reduzieren einer Geschwindigkeit in einer Kurve, und/oder Reduzieren eines Schwankens oder einer Oszillation eines zeitlichen Verlaufs des Lenkwinkels, wodurch ein Schlingern der Anhängervorrichtung reduziert oder sogar vermieden werden kann; und/oder
- ein Erhöhen eines Lenkwiderstands, vorzugsweise ein Erhöhen des Lenkwiderstands auf einen Wert, der höher ist als ein Wert des Lenkwiderstands in einem manuellen Fahrmodus; hierdurch kann ein Schwimmen und Schlingern durch kleine, ruckartige Lenkbewegungen des Fahrers reduziert oder sogar vermieden werden, wodurch das Ladegut schonender transportiert wird.

Diese genannten Maßnahmen werden durch den Fahrmodus durchgeführt, falls das vorgegebene Spezialtransportkriterium einen vorgegebenen Mindestgrad einer Sensibilität des Ladeguts beschreibt, mit anderen Worten falls das Ladegut ein sensibles Ladegut ist. Die genannten Maßnahmen haben sich bei einem solchen Ladegut als besonders vorteilhaft bewährt.

Die Eigenschaft des Ladeguts wird durch eine Sensoreinrichtung des Kraftfahrzeugs und/oder der Anhängervorrichtung erfasst, wobei unter einer Sensoreinrichtung ein Gerät oder eine Gerätekomponente eine Gerätegruppe zum Erfassen der Eigenschaft des Ladeguts ausgestaltet und eingerichtet ist. Die Sensoreinrichtung kann dabei zum Beispiel mehrere Sensoren im Kraftfahrzeug und/oder in der Anhängervorrichtung aufweisen. Durch die Sensoreinrichtung erfolgt ein Erfassen der Eigenschaft des Ladeguts. Durch die Sensoreinrichtung erfolgt ein Erzeugen des Ladegutkategorisierungssignals in Abhängigkeit von der erfassten Eigenschaft. Dabei kann das erzeugte Ladegutkategorisierungssignal von der Fahrerassistenzeinrichtung aus der Sensoreinrichtung empfangen und dadurch bereitgestellt werden. Durch diese Ausführungsform des erfindungsgemäßen Verfahrens kann die Eigenschaft des Ladeguts zuverlässig ermittelt werden und setzt nicht voraus, dass ein Benutzer des Kraftfahrzeugs sich mit den Eigenschaften des Ladeguts auskennt.

Zusätzlich kann der festgelegte Fahrmodus teilautonom oder vollautonom durchführen:
- ein Bereitstellen einer vorgegebenen Motorleistung, vorzugsweise einer Motorleistung, die höher ist als eine in einem manuellen Fahrmodus verfügbare Motorleistung; und/oder
- ein Bereitstellen eines vorgegebenen Drehmoments, vorzugsweise eines Drehmoments, das höher ist als ein Drehmoment, das in einem manuellen Fahrmodus verfügbar ist; und/oder
- ein Vorgeben eines reduzierten Lüftspiels einer Bremseinrichtung durch zum Beispiel Vorbefüllen der Bremseinrichtung als "adaptive Bremse" für ein schnellstmögliches Abbremsen, wobei unter einer Bremseinrichtung ein technisches System zur Verzögerung eines Kraftfahrzeugs verstanden wird, zum Beispiel eine Bremsanlage mit einer elektronisch ansteuerbaren hydraulischen Bremse; und/oder
- ein Vorgeben und/oder Anpassen einer Kennlinie zum Bremsen, wobei die vorgegebene Kennlinie vorzugsweise gegenüber einer Kennlinie in einem manuellen Fahrmodus zum Beispiel eine verschärfte, d.h. steilere, Kennlinie (zum Beispiel Pedalweg-Bremsmoment-Kennlinie) sein kann.

Diese Maßnahmen haben sich ebenfalls als besonders vorteilhaft bei einem besonderen Ladegut erwiesen, insbesondere bei einer schweren Last, wenn also das vorgegebene Spezialtransportkriterium ein vorgegebenes Mindestgewicht des Ladeguts beschreibt und das Ladegut das vorgegebenen Spezialtransportkriterium erfüllt.

Zusätzlich kann die Fahrerassistenzeinrichtung eine Bedieneinrichtung aufweisen, also eine Gerätekomponente zum Empfangen einer Bedienhandlung des Benutzers. Führt das Fahrerassistenzeinrichtung ein Erfassen der Bedienhandlung des Benutzers durch, wobei die erfasste Bedienhandlung die Eigenschaft des Ladeguts festlegt, kann durch die Fahrerassistenzeinrichtung das Erzeugen des Ladegutkategorisierungssignals in Abhängigkeit von der erfassten Bedienhandlung, und dadurch das Bereitstellen des Ladegutskategorisierungssignals, erfolgen. Beispielsweise kann der Benutzer des Kraftfahrzeugs über zum Beispiel eine benutzersensitive Bildschirmoberfläche eines Bildschirms der Fahrerassistenzeinrichtung eingeben, dass er zum Beispiel zwei Pferde transportiert und/oder eine Last von über 600 Kilogramm. Dies gibt dem Benutzer die Kontrolle über den eingestellten Fahrmodus.

In einer Weiterführung kann die Fahrerassistenzeinrichtung, bei Feststellen der Kopplung des Kraftfahrzeugs mit der Anhängervorrichtung, auf einem Bildschirmelement der Fahrerassistenzeinrichtung mindestens ein Anzeigeelement bereitstellen, wobei das Anzeigeelement zum Auswählen a) der Eigenschaft des Ladeguts; und/oder b) des Fahrmodus; und/oder c) eines Profils, das das Ladegut beschreibt, ausgestaltet sein kann. Dadurch wird der Benutzer des Kraftfahrzeugs bei jedem Benutzen der Anhängervorrichtung daran erinnert, genauere Angaben zu dem Ladegut zu machen, sodass der Fahrer beim Führen des Kraftfahrzeugs unterstützt wird.

Die oben gestellte Aufgabe wird gelöst durch eine Fahrerassistenzeinrichtung, die dazu eingerichtet ist, die eine Fahrerassistenzeinrichtung betreffenden Verfahrensschritte eines Verfahrens nach einer der oben beschriebenen Ausführungsformen des erfindungsgemäßen Verfahrens durchzuführen. Dabei weist die Fahrerassistenzeinrichtung eine Prozessoreinrichtung auf, also eine Gerätekomponente zur elektronischen Datenverarbeitung. Die optionale Prozessoreinrichtung kann mindestens einen Mikrocontroller und/oder mindestens einen Mikroprozessor aufweisen. In einem Datenspeicher, zum Beispiel einem Datenspeicher der Fahrerassistenzeinrichtung, kann optional ein Programmcode abgelegt sein, der bei Ausführen durch die Prozessoreinrichtung die Fahrerassistenzeinrichtung dazu veranlasst, eine Ausführungsform des erfindungsgemäßen Verfahrens durchzuführen. Ein geeigneter Datenspeicher kann zum Beispiel eine Speicherkarte oder ein Speicherchip sein.

Die oben gestellte Aufgabe wird gelöst durch ein Kraftfahrzeug, das eine Ausführungsform der erfindungsgemäßen Fahrerassistenzeinrichtung aufweist. Das Kraftfahrzeug kann vorzugsweise als Kraftwagen ausgestaltet sein, zum Beispiel als Personenkraftwagen. Das Kraftfahrzeug kann vorzugsweise ein Kraftfahrzeug mit einer Anhängerkupplung sein, vorzugsweise ein Nutzfahrzeug, eine landwirtschaftliche Maschine, ein Zugfahrzeug und/oder ein Flurfördergerät, vorzugsweise ein Flurfördergerät oder Flurförderzeug in der Logistik.

Das erfindungsgemäße Verfahren kann alternativ auch als Computerimplementierungsverfahren bezeichnet werden. Die oben gestellte Aufgabe wird ebenfalls gelöst von einer Vorrichtung und/oder einem System zur Datenverarbeitung, das die oben genannten Mittel zur Ausführung des erfindungsgemäßen Verfahrens umfasst. Die oben gestellte Aufgabe wird außerdem gelöst durch ein Computerprogrammprodukt, umfassend Befehle, die bei der Ausführung des Programms durch einen Computer diesen veranlassen, die Verfahrensschritte einer der oben beschriebenen Ausführungsformen des erfindungsgemäßen Verfahrens auszuführen und/oder durchzuführen. Die oben gestellte Aufgabe wird ebenfalls gelöst durch ein computerlesbares Speichermedium, umfassend Befehle, die bei der Ausführung durch einen Computer diesen veranlassen, die Verfahrensschritte einer der Ausführungsformen des erfindungsgemäßen Verfahrens auszuführen und/oder durchzuführen.

Zu der Erfindung gehören auch Weiterbildungen der erfindungsgemäßen Vorrichtungen, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Vorrichtungen hier nicht noch einmal beschrieben.

Die Erfindung umfasst auch die Kombinationen der Merkmale der beschriebenen Ausführungsformen.

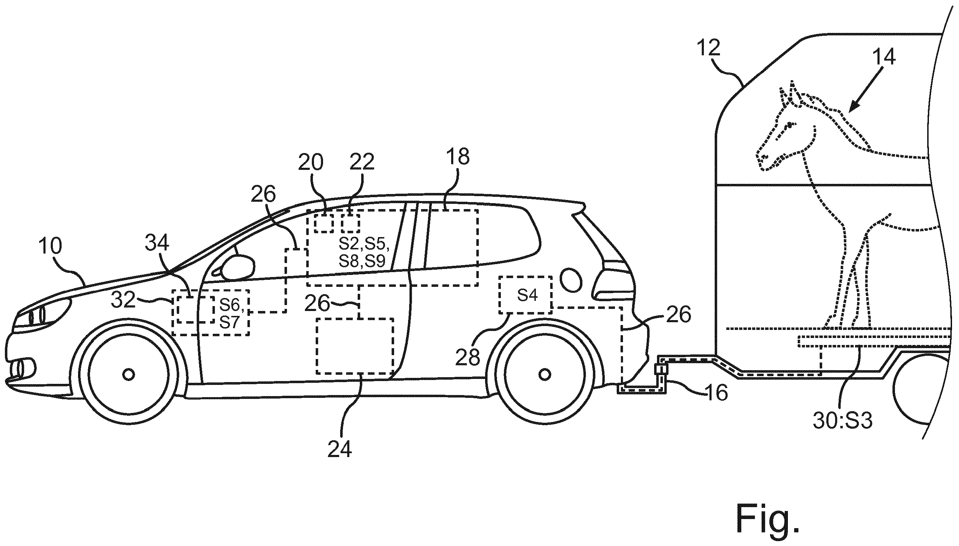

Im Folgenden ist ein Ausführungsbeispiel der Erfindung beschrieben. Hierzu zeigt die einzige Figur ("Fig."):
- Fig.: eine schematische Darstellung zu einem ersten Ausführungsbeispiel des erfindungsgemäßen Verfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In der Figur sind funktionsgleiche Elemente jeweils mit denselben Bezugszeichen versehen.

Die Fig. veranschaulicht das Prinzip des erfindungsgemäßen Verfahrens und der erfindungsgemäßen Vorrichtungen anhand eines Ausführungsbeispiels. Hierzu zeigt die Fig. beispielhaft ein Kraftfahrzeug 10, das zum Beispiel als Personenkraftwagen oder als landwirtschaftliches Fahrzeug ausgestaltet sein kann. Im Beispiel der Fig. kann das Kraftfahrzeug 10 bereits an eine Anhängervorrichtung 12 gekoppelt sein, wobei die Anhängervorrichtung 12 zum Beispiel als Pferdeanhänger ausgestaltet sein kann. Das erfindungsgemäße Verfahren wird anhand eines beispielhaften Pferdetransports beschrieben, wobei das Ladegut 14 ein Pferd sein kann.

Das Kraftfahrzeug 10 weist eine Fahrerassistenzeinrichtung 18 auf, das zum Beispiel eine Gruppe elektronischer Zusatzeinrichtungen zum Unterstützen des Fahrers in bestimmten Fahrsituationen umfassen kann. Die Fahrerassistenzeinrichtung 18 kann hierzu vorzugsweise auch ein Steuermodul aufweisen. Die Fahrerassistenzeinrichtung 18 kann vorzugsweise dazu ausgestaltet und eingerichtet sein, eine Längs- und/oder Querführung des Kraftfahrzeugs 10 zu steuern/regeln. Die Fahrerassistenzeinrichtung kann optional eine Prozessoreinrichtung 20 aufweisen, die zum Beispiel mehrere Mikroprozessoren aufweisen kann, und/oder einen Datenspeicher 22, in dem zum Beispiel ein Programmcode zum Durchführen des erfindungsgemäßen Verfahrens abgelegt sein kann.

Zum Steuern einer Längsführung des Kraftfahrzeugs 10 kann die Fahrerassistenzeinrichtung 18 zum Beispiel eine Bremseinrichtung 24 steuern, wobei die Bremseinrichtung 24 als aus dem Stand der Technik bekanntes Bremssystem eines Kraftfahrzeugs 10 ausgestaltet sein kann, zum Beispiel als elektronisch steuerbare, hydraulische Bremsanlage. Die Datenkommunikationsverbindung 26 zwischen Fahrerassistenzeinrichtung 18 und Bremseinrichtung 24 kann zum Beispiel eine drahtlose Datenkommunikationsverbindung 26 sein, zum Beispiel eine WLAN-Verbindung oder eine drahtgebundene Datenkommunikationsverbindung 26, zum Beispiel ein Datenbus des Kraftfahrzeugs 10, zum Beispiel ein CAN-Bus.

Das Kraftfahrzeug 10 kann optional eine Sensoreinrichtung 28 aufweisen, alternativ kann die Sensoreinrichtung 28 auch ein Bestandteil der Anhängervorrichtung 12 sein, oder eine Gruppe von Komponenten des Kraftfahrzeugs 10 und der Anhängervorrichtung 12 umfassen. Im Beispiel der Fig. kann die Sensoreinrichtung 28 zum Beispiel einen oder mehrere Gewichtssensoren 30 aufweisen, wobei der beispielhafte Gewichtssensor 30 der Fig. zum Beispiel in einem Boden des beispielhaften Pferdeanhängers angeordnet sein kann und dabei zum Beispiel ein Gewicht eines Pferdes messen kann.

Optional kann die Fahrerassistenzeinrichtung 18 ein Bildschirmelement 32 aufweisen, das zum Beispiel als dem Fachmann aus dem Stand der Technik bekannter berührungssensitiver Bildschirm ausgestaltet sein kann. Das Bildschirmelement 32 kann alternativ zum Beispiel als "Bildschirmeinrichtung" oder "Anzeigeeinrichtung" bezeichnet werden.

Bei Koppeln der Anhängervorrichtung 12 kann optional die Sensoreinrichtung 28 über ein Feststellen einer elektrischen Verbindung zwischen dem Kraftfahrzeug 10 und der Anhängervorrichtung 12 das Koppeln des Kraftfahrzeugs 10 an die Anhängervorrichtung 12 erfassen (Verfahrensschritt S1). Solche Sensoren sind dem Fachmann aus dem Stand der Technik bekannt. Optional kann dabei die Sensoreinrichtung 28 ein Teil der Fahrerassistenzeinrichtung 18 sein. Ist dies der Fall, kann mit dem Erfassen der Kopplung (S1) die Kopplung durch die Fahrerassistenzeinrichtung 18 festgestellt werden (Verfahrensschritt S2). Alternativ kann die Sensoreinrichtung 28 ein entsprechendes Signal mit zum Beispiel einer Bestätigung über die erfolgte Kopplung an die Fahrerassistenzeinrichtung 18 übertragen.

Vorzugsweise kann der optionale Gewichtssensor ein Gewicht des Ladeguts 14 erfassen (S3) und ein entsprechendes Ladegutkategorisierungssignal erzeugen (S4). Das erzeugte Ladegutkategorisierungssignal kann zum Beispiel einen absoluten Wert des erfassten Gewichts beschreiben, zum Beispiel ein Gewicht von 800 Kilogramm. Alternativ kann das erzeugte Ladegutkategorisierungssignal, dass an die Fahrerassistenzeinrichtung 18 übertragen werden kann, beschreiben, dass der beispielhafte Gewichtssensor 30 eine Last von zum Beispiel über 200 Kilogramm erfasst haben kann.

Alternativ kann zum Beispiel ein auf Kopfhöhe angebrachter Sensor, der zum Beispiel als Kamera ausgestaltet sein kann, ein Bild des Ladeguts 14 aufnehmen, und durch zum Beispiel eine Bildanalyse durch die Sensoreinrichtung 28 kann als Eigenschaft des Ladeguts 14 erfasst werden (S3), dass es sich bei dem Ladegut 14 um ein Pferd handelt. Das erzeugte Ladegutkategorisierungssignal wird an die Fahrerassistenzeinrichtung 18 übertragen, wird also von der Fahrerassistenzeinrichtung 18 aus der Sensoreinrichtung 28 empfangen (S5).

Alternativ oder zusätzlich kann das Ladegutkategorisierungssignal aus dem Bildschirmelement 32 empfangen werden (S5). Bei einem Feststellen der Kopplung der Anhängervorrichtung 12 an das Kraftfahrzeug 10 (S2) kann zum Beispiel die Fahrerassistenzeinrichtung 18 ein Anzeigeelement 34 erzeugen, an das Bildschirmelement 32 übertragen, und auf diesem bereitstellen werden (S6). Auf einer Bedienoberfläche des Bildschirmelements 32 kann als Anzeigeelement 34 zum Beispiel ein Pop-Up-Fenster angezeigt werden, dass zum Beispiel einem Fahrer des Kraftfahrzeugs 10 mehrere Profile zur Auswahl anzeigen kann. Alternativ kann das Anzeigeelement 34 zum Beispiel mehrere Bedienfelder aufweisen, wobei jedes der Bedienfelder eine Eigenschaft des Ladeguts 14 beschreiben kann, zum Beispiel "Pferdetransport", "Schweres Transportgut" oder "Sensibles Transportgut". Ist das Bildschirmelement 32 zum Beispiel als berührungssensitiver Bildschirm ausgestaltet, kann das Bildschirmelement 32 eine Bedienhandlung des Benutzers erfassen (S7). In Abhängigkeit einer solchen erfassten Bedienhandlung kann dann das Ladegutkategorisierungssignal erzeugt werden (S4). Alternativ kann eine Bedienhandlung durch ein andersartiges Bediengerät erfasst werden (S7), zum Beispiel durch einen Drehdrücksteller oder durch eine Taste.

Ein Spezialtransportkriterium kann beispielsweise in dem beispielhaften Datenspeicher 22 abgelegt sein. Das vorgegebenen Spezialtransportkriterium kann zum Beispiel das Einstellen eines bestimmten teilautonomen Fahrmodus bei einem Mindestgewicht des Ladeguts 14 von 200 Kilogramm oder mehr sein. Alternativ oder zusätzlich kann das Spezialtransportkriterium das Einstellen des Fahrmodus vorgeben, falls das Ladegut 14 einen Mindestgrad einer Sensibilität beschreibt. Ein solcher Mindestgrad der Sensibilität kann zum Beispiel erreicht sein, wenn das Ladegut 14 einer vorbestimmten Kategorie an Ladegut 14 zugeordnet werden kann, wobei dieser Kategorie zum Beispiel einen vorgegebener, die Sensibilität einstufender Wert haben kann. Beschreibt das bereitgestellte Ladegutkategorisierungssignal zum Beispiel die Fracht als "Tiertransport", kann zum Beispiel in einer digitalen Liste oder Datenbank in dem Datenspeicher 22 die Kategorie "Tiertransport" einem hohen Grad an Sensibilität zugeordnet werden, wobei dieser Grad den vorgegebenen Mindestgrad überschreiten kann.

Das durch das Beispiel der Fig. beschriebene Gewicht des Ladeguts von 800 Kilogramm kann das Spezialtransportkriterium beispielsweise erfüllen, wenn das vorgegebenen Spezialtransportkriterium als Schwellenwert zum Beispiel ein Gewicht von 200 Kilogramm vorgibt. Einem Ladegut 14 von über 200 Kilogramm Gewicht kann dann beispielsweise ein teilautonomer Fahrmodus zugeordnet werden, indem durch die Fahrerassistenzeinrichtung 18 nicht nur eine Quersteuerung, sondern auch eine Längssteuerung zumindest teilweise übernommen werden kann. Hierdurch kann der zumindest teilautonome Fahrmodus festgelegt werden (S8). Nach Festlegen des Fahrmodus (S8) kann der festgelegte Fahrmodus aktiviert werden (S9).

Vorzugsweise, falls das Ladegut 14 ein schweres Ladegut 14 ist, kann der festgelegte Fahrmodus ein Anfahrverhalten des Kraftfahrzeugs regeln. Hierzu kann beispielsweise eine maximale Beschleunigung begrenzt werden, wodurch ein ruckartiges Anfahren reduziert werden kann. Wird eine maximale Beschleunigung begrenzt, so kann diese vorzugsweise im vorderen Fahrpedalbereich begrenzt werden, sodass der Fahrer bei einem Durchtreten des Fahrpedals zum Beispiel im Notfall die Begrenzung manuell durchbrechen kann, um zum Beispiel ruckartig nach vorne zu fahren um einer Gefahr auszuweichen. Zum optionalen Glätten einer Lenkbewegung kann beispielsweise durch den festgelegten Fahrmodus ein möglicher Lenkwinkel eingeschränkt werden, sodass der Fahrer keine scharfen Kurven fahren kann. Alternativ oder zusätzlich kann zum Glätten einer Lenkbewegung auch zum Beispiel eine maximale Geschwindigkeit oder eine maximale Beschleunigung beim Durchfahren einer Kurve begrenzt werden. Alternativ oder zusätzlich kann durch den Fahrmodus ein Lenkwiderstand erhöht werden. Jeweils geeignete Maßnahmen hierzu sind dem Fachmann aus dem Stand der Technik bekannt.

Vorzugsweise, falls das Ladegut 14 ein sensibles Ladegut 14 ist, also zum Beispiel ein Tier, das leicht erschrecken kann, kann durch den Fahrmodus zum Beispiel eine Motorleistung in einem vorgegebenen Bereich bereitgestellt werden, vorzugsweise eine Motorleistung, die höher ist als in einem manuellen Fahrmodus ohne Anhängervorrichtung 12, oder bei einer Fahrt mit einem Ladegut 14, dass das Spezialtransportkriterium nicht erfüllt. Alternativ oder zusätzlich kann mehr Drehmoment bereitgestellt werden, falls die zu transportierende Fracht das Spezialtransportkriterium erfüllt. Maßnahmen zum Regeln der Motorleistung und zum Regeln des Drehmoments sind dem Fachmann aus dem Stand der Technik bekannt.

Alternativ oder zusätzlich kann die Fahrerassistenzeinrichtung bei Erfüllen des Spezialtransportkriteriums zum Beispiel die Bremseinrichtung 24 vorbefüllen, wie es dem Fachmann aus dem Stand der Technik in einer so genannten "adaptiven Bremse" bekannt ist. Eine weitere, optionale Maßnahme ist das Vorgeben einer Kennlinie zum Bremsen, beispielsweise eine steilere Kennlinie.

Insgesamt zeigt das Ausführungsbeispiel, wie durch die Erfindung eine erweiterte Gespannstabilisierung bereitgestellt wird.

Die Fahrerassistenzeinrichtung 18, die auch als Assistenzsystem bezeichnet werden kann, kann vorzugsweise abhängig von der Beladungssituation auf ein Profil oder mehrere Profile in zum Beispiel einem Aktoriksteuergerät oder in Aktoriksteuergeräten zurückgreifen. Beispielsweise für eine sensible Last, also für ein sensibles Ladegut 14, kann durch die Fahrerassistenzeinrichtung 18 bereitgestellt werden: ein sanftes, geregeltes Anfahrverhalten im Antrieb zur Reduktion und/oder Vermeidung von ruckartigen Bewegungen; und/oder einen Eingrenzung der maximalen Beschleunigung im vorderen Fahrpedalbereich (kann vorzugsweise zum Beispiel kräftiges Treten des Fahrpedals überstimmt werden, zum Beispiel in Notsituationen); und/oder ein "Glätten" einer Lenkbewegung durch den Fahrer, um ein Schlingern zu reduzieren oder zu vermeiden; und/oder ein Bereitstellen eines leicht erhöhten Lenkwiderstands, um Schwimmen und Schlingern durch kleine, ruckartige Lenkbewegungen des Fahrers zu reduzieren oder zu vermeiden.

Bei einer schweren Last, also beim Transportieren eines schweren Ladeguts 14, kann vorzugsweise eine Bereitstellung von höherer Motorleistung beziehungsweise mehr Drehmoment erfolgen, wenn zum Beispiel eine schwere Last anhängt; und/oder ein Vorbefüllen der Bremse beziehungsweise es kann mit verschärfter Kennlinie gebremst werden.

Vorzugsweise kann das beispielhafte Assistenzsystem über eine Bedienoberfläche aktiviert werden. Beispielsweise kann ein Pop-Up-Fenster mit einer Abfrage zur Aktivierung immer dann bereitgestellt werden, wenn zum Beispiel eine elektrische Verbindung mit einer Anhängervorrichtung 12, zum Beispiel einem Anhänger, erkannt wird; in diesem beispielhaften Pop-Up-Fenster können zum Beispiel mehrere Profile enthalten sein; der Fahrer kann dann zum Beispiel sein gewünschtes Profil (zum Beispiel schwere Last, sensible Last und/oder keine Aktivierung) auswählen.

Das Kraftfahrzeug 10 kann als jeglicher Fahrzeugtyp mit einer Anhängerkupplung ausgestaltet sein, auch als Nutzfahrzeug. Optional kann das Kraftfahrzeug 10 als landwirtschaftliche Maschine, Zugfahrzeug oder Flurförderzeug in der Logistik ausgestaltet sein.

### Bezugszeichenliste

- 10: Kraftfahrzeug
- 12: Anhängervorrichtung
- 14: Ladegut
- 16: Anhängerkupplung
- 18: Fahrerassistenzeinrichtung
- 20: Prozessoreinrichtung
- 22: Datenspeicher
- 24: Bremseinrichtung
- 26: Datenkommunikationsverbindung
- 28: Sensoreinrichtung
- 30: Gewichtssensor
- 32: Bildschirmelement
- 34: Anzeigeelement

## Patentansprüche

1. Verfahren zum Betreiben eines Kraftfahrzeugs (10) mit einer Anhängervorrichtung (12), aufweisend die durch eine Fahrerassistenzeinrichtung (18) des Kraftfahrzeugs (10) durchgeführten Schritte:
- Feststellen einer Kopplung des Kraftfahrzeugs (10) mit der Anhängervorrichtung (12, S2),
- Bereitstellen eines Ladegutkategorisierungssignals, das eine Eigenschaft eines Ladeguts (14) der Anhängervorrichtung (12) beschreibt (S5),
- anhand des bereitgestellten Ladegutkategorisierungssignals: Überprüfen, ob das Ladegut (14) ein vorgegebenes Spezialtransportkriterium erfüllt, wobei das vorgegebene Spezialtransportkriterium einen vorgegebenen Mindestgrad einer Sensibilität des Ladeguts (14) beschreibt,
- falls das Ladegut (14) das vorgegebene Spezialtransportkriterium erfüllt: Festlegen eines zumindest teilautonomen Fahrmodus anhand der durch das bereitgestellte Ladegutkategorisierungssignal beschriebenen Eigenschaft (S8), und
- Aktivieren des festgelegten Fahrmodus (S9);
wobei der festgelegte Fahrmodus zumindest teilautonom durchführt:
- ein Regeln eines Anfahrverhaltens des Kraftfahrzeugs (10) im Antrieb; und/oder
- ein Begrenzen einer maximalen Beschleunigung, vorzugsweise im vorderen Fahrpedalbereich; und/oder
- ein Glätten einer Lenkbewegung; und/oder
- ein Erhöhen eines Lenkwiderstands;
und wobei das Verfahren die durch eine Sensoreinrichtung (28) des Kraftfahrzeugs (10) und/oder der Anhängervorrichtung (12) durchgeführten Schritte aufweist:
- Erfassen der Eigenschaft des Ladeguts (14, S3), und
- Erzeugen des Ladegutkategorisierungssignals in Abhängigkeit von der erfassten Eigenschaft (S4), wobei das erzeugte Ladegutkategorisierungssignal von der Fahrerassistenzeinrichtung (18) aus der Sensoreinrichtung (28) empfangen wird (S5).

2. Verfahren nach Anspruch 1, wobei der festgelegte Fahrmodus zumindest teilautonom durchführt:
- ein Bereitstellen einer vorgegebenen Motorleistung, vorzugsweise einer Motorleistung, die höher ist als eine in einem manuellen Fahrmodus verfügbare Motorleistung; und/oder
- ein Bereitstellen eines vorgegebenen Drehmoments, vorzugsweise eines Drehmoments, das höher ist als eines in einem manuellen Fahrmodus verfügbaren Drehmoments; und/oder
- ein Vorgeben eines reduzierten Lüftspiels einer Bremseinrichtung (24); und/oder
- Vorgeben und/oder Anpassen einer Kennlinie zum Bremsen, wobei die vorgegebene Kennlinie vorzugsweise gegenüber einer Kennlinie in einem manuellen Fahrmodus eine steilere Kennlinie ist.

3. Verfahren nach Anspruch 2, wobei das vorgegebene Spezialtransportkriterium ein vorgegebenes Mindestgewicht des Ladeguts (14) beschreibt.

4. Verfahren nach einem der vorhergehenden Ansprüche, aufweisend die durch die Fahrerassistenzeinrichtung (18) durchgeführten Schritte:
- Erfassen einer Bedienhandlung des Benutzers, wobei die erfasste Bedienhandlung die Eigenschaft des Ladeguts (14, S7) festlegt, und
- Erzeugen des Ladegutkategorisierungssignals in Abhängigkeit von der erfassten Bedienhandlung (S4).

5. Verfahren nach Anspruch 4, aufweisend die durch die Fahrerassistenzeinrichtung (18) durchgeführten Schritte:
- bei Feststellen der Kopplung des Kraftfahrzeugs (10) mit der Anhängervorrichtung (12, S2): auf einem Bildschirmelement (32) der Fahrerassistenzeinrichtung (18) Bereitstellen mindestens eines Anzeigeelements (34, S6) zum Auswählen a) der Eigenschaft des Ladeguts (14); und/oder b) des Fahrmodus; und/oder c) eines Profils, das das Ladegut (14) beschreibt.

6. Fahrerassistenzeinrichtung (18) mit einer Prozessoreinrichtung zur elektronischen Datenverarbeitung, wobei die Prozessoreinrichtung dazu eingerichtet ist, die eine Fahrerassistenzeinrichtung (18) betreffenden Verfahrensschritte eines Verfahrens nach einem der vorhergehende Ansprüche durchzuführen.

7. Kraftfahrzeug (10), das durch eine Fahrerassistenzeinrichtung (18) nach Anspruch 6 gekennzeichnet ist.

## Claims

1. Method for operating a motor vehicle (10) with a trailer device (12), comprising the following steps performed by a driver assistance apparatus (18) of the motor vehicle (10):
- identifying coupling of the motor vehicle (10) to the trailer device (12, S2),
- providing a cargo categorization signal that describes a property of cargo (14) of the trailer device (12) (S5),
- on the basis of the provided cargo categorization signal: checking whether the cargo (14) meets a predefined special transport criterion, wherein the predefined special transport criterion describes a predefined minimum degree of sensitivity of the cargo (14),
- if the cargo (14) meets the predefined special transport criterion: defining an at least partially autonomous driving mode on the basis of the property described by the provided cargo categorization signal (S8), and
- activating the defined driving mode (S9);
wherein the defined driving mode at least partially autonomously performs the following:
- regulating a driving-off behaviour of the motor vehicle (10) in the drive; and/or
- limiting a maximum acceleration, preferably in the front accelerator pedal region; and/or
- smoothing a steering movement; and/or
- increasing a steering resistance;
and wherein the method comprises the following steps performed by a sensor apparatus (28) of the motor vehicle (10) and/or of the trailer device (12):
- acquiring the property of the cargo (14, S3), and
- generating the cargo categorization signal on the basis of the acquired property (S4), wherein the generated cargo categorization signal is received by the driver assistance apparatus (18) from the sensor apparatus (28) (S5).

2. Method according to Claim 1, wherein the defined driving mode at least partially autonomously performs the following:
- providing a predefined engine power, preferably an engine power that is greater than an engine power available in a manual driving mode; and/or
- providing a predefined torque, preferably a torque that is greater than a torque available in a manual driving mode; and/or
- predefining a reduced play of a braking apparatus (24); and/or
- predefining and/or adjusting a braking characteristic curve, wherein the predefined characteristic curve is preferably a steeper characteristic curve in comparison with a characteristic curve in a manual driving mode.

3. Method according to Claim 2, wherein the predefined special transport criterion describes a predefined minimum weight of the cargo (14).

4. Method according to one of the preceding claims, comprising the following steps performed by the driver assistance apparatus (18):
- acquiring an operating action by the user, wherein the acquired operating action defines the property of the cargo (14, S7), and
- generating the cargo categorization signal on the basis of the acquired operating action (S4).

5. Method according to Claim 4, comprising the following steps performed by the driver assistance apparatus (18):
- upon identifying coupling of the motor vehicle (10) to the trailer device (12, S2): providing, on a screen element (32) of the driver assistance apparatus (18), at least one display element (34, S6) for selecting a) the property of the cargo (14); and/or b) the driving mode; and/or c) a profile that describes the cargo (14).

6. Driver assistance apparatus (18) having an electronic data-processing processor apparatus, wherein the processor apparatus is designed to perform the method steps, in relation to a driver assistance apparatus (18), of a method according to one of the preceding claims.

7. Motor vehicle (10), **characterized by** a driver assistance apparatus (18) according to Claim 6.

## Revendications

1. Procédé pour faire fonctionner un véhicule automobile (10) pourvu d'un arrangement de remorque (12), comprenant les étapes suivantes, exécutées par un dispositif d'aide à la conduite (18) du véhicule automobile (10) :
- constatation d'un accouplement du véhicule automobile (10) avec l'arrangement de remorque (12, S2),
- fourniture d'un signal de catégorisation de marchandise chargée, qui décrit une propriété d'une marchandise chargée (14) de l'arrangement de remorque (12) (S5),
- à l'aide du signal de catégorisation de marchandise chargée : vérification si la marchandise chargée (14) satisfait un critère de transport spécial prédéfini, le critère de transport spécial prédéfini décrivant un degré minimal prédéfini d'une sensibilité de la marchandise chargée (14),
- dans le cas où la marchandise chargée (14) satisfait le critère de transport spécial prédéfini : spécification d'un mode de conduite au moins partiellement autonome à l'aide de la propriété décrite par le signal de catégorisation de marchandise chargée (S8) et
- activation du mode de conduite spécifié (S9) ;
le mode de conduite spécifié réalisant de manière au moins partiellement autonome :
- une régulation d'un comportement de démarrage du véhicule automobile (10) en propulsion ; et/ou
- une limitation d'une accélération maximale, de préférence dans la zone de pédale d'accélérateur avant ; et/ou
- un lissage d'un mouvement de direction ; et/ou
- une augmentation d'une résistance au braquage ;
et le procédé comprenant les étapes suivantes, exécutées par un dispositif de détection (28) du véhicule automobile (10) et/ou de l'arrangement de remorque (12) :
- détection de la propriété de la marchandise chargée (14, S3), et
- génération du signal de catégorisation de marchandise chargée en fonction de la propriété détectée (S4), le signal de catégorisation de marchandise chargée généré étant reçu par le dispositif d'aide à la conduite (18) en provenance du dispositif de détection (28) (S5).

2. Procédé selon la revendication 1, le mode de conduite spécifié réalisant de manière au moins partiellement autonome :
- une fourniture d'une puissance de moteur prédéfinie, de préférence une puissance de moteur qui est supérieure à une puissance de moteur disponible dans un mode de conduite manuel ; et/ou
- une fourniture d'un couple prédéfini, de préférence un couple qui est supérieur à un couple disponible dans un mode de conduite manuel ; et/ou
- une prédéfinition d'un jeu d'un dispositif de freinage (24) ; et/ou
- prédéfinition et/ou adaptation d'une courbe caractéristique pour le freinage, la courbe caractéristique prédéfinie étant de préférence une courbe caractéristique plus raide par rapport à une courbe caractéristique dans un mode de conduite manuel.

3. Procédé selon la revendication 2, le critère de transport spécial prédéfini décrivant un poids minimal prédéfini de la marchandise chargée (14).

4. Procédé selon l'une des revendications précédentes, comprenant les étapes suivantes, exécutées par le dispositif d'aide à la conduite (18) :
- détection d'une manipulation de commande de l'utilisateur, la manipulation de commande détectée spécifiant la propriété de la marchandise chargée (14, S7), et
- génération du signal de catégorisation de marchandise chargée en fonction de la manipulation de commande détectée (S4).

5. Procédé selon la revendication 4, comprenant les étapes suivantes, exécutées par le dispositif d'aide à la conduite (18) :
- lors de la constatation d'un accouplement du véhicule automobile (10) avec l'arrangement de remorque (12, S2) : fourniture, sur un élément d'écran (32) du dispositif d'aide à la conduite (18), d'au moins un élément d'affichage (34, S6) servant à sélectionner a) la propriété de la marchandise chargée (14) ; et/ou b) le mode de conduite ; et/ou c) un profil qui décrit la marchandise chargée (14).

6. Dispositif d'aide à la conduite (18) comprenant un dispositif à processeur servant au traitement électronique de données, le dispositif à processeur étant conçu pour exécuter les étapes concernant un dispositif d'aide à la conduite (18) d'un procédé selon l'une des revendications précédentes.

7. Véhicule automobile (10), lequel est **caractérisé par** un dispositif d'aide à la conduite (18) selon la revendication 6.
